# EUROPÄISCHE PATENTANMELDUNG

(11) **EP 1 647 393 A2**
(43) Veröffentlichungstag der Anmeldung: **19.04.2006**
(21) Anmeldenummer: 06000251.6
(22) Anmeldetag: 18.07.2002
(51) Int. Cl.: B29C 67/24

(54) **Formschliessvorrichtung für eine Spritzgiessmaschine**

(30) Priorität: 03.08.2001 DE 10138087
(62) Teilanmeldung aus: 02767225.2
(71) Anmelder: Krauss-Maffei Kunststofftechnik GmbH, 80997 München (DE)
(72) Erfinder: Wohlrab, Walter, 91781 Weissenburg (DE); Wobbe, Hans Dr, 82211 Herrsching (DE)
(74) Vertreter: Wilhelm, Ludwig

(57) **Zusammenfassung**

Die Erfindung betrifft eine Formschließvorrichtung einer Spritzgießmaschine zur Herstellung von aus zwei oder mehreren Kunststoffkomponenten bestehenden Kunststoffteilen, bei der zwischen zwei äußeren Formaufspannplatten ein mittleres drehbares Formträgerelement angeordnet ist, und wobei mindestens ein Einspritzaggregat einer Spritzgießmaschine vorgesehen ist.

Die Erfindung zeichnet sich dadurch aus, dass die eine der äußeren Formaufspannplatten mit mindestens einem Einspritzaggregat mit Einspritzdüse und die andere der äußeren Formaufspannplatten mit mindestens einer RIM-Vorrichtung mit Mischkopf gekoppelt ist.

## Beschreibung

Die Erfindung betrifft eine Formschließvorrichtung einer Spritzgießmaschine von der im Oberbegriff des Patentanspruchs 1 angegebenen Art.

Eine Formschließeinheit dieser Art ist aus der GB 2 300 142 bekannt, bei der die beiden äußeren Formaufspannplatten jeweils aus einer maschinenrahmenfesten Formaufspannplatte und einer verschieblich am Maschinenrahmen abgestützten Formaufspannplatte bestehen. Das mittlere Formträgerelement ist dabei über einen Tragrahmen ebenfalls verschieblich am Maschinenrahmen abgestützt. Aufgrund der Verfahrbarkeit des im Tragrahmen drehbar angeordneten mittleren Formträgerelements ist dieses Bauelement verhältnismäßig instabil, so daß in der Regel nur Werkzeughälften mit geringem Gewicht auf den Formaufspannflächen des drehbaren Formträgerelements angeordnet werden können. Da das mittlere Formträgerelement und die bewegliche äußere Formaufspannplatte zwei hintereinander geschaltete verschiebliche Formhaltevorrichtungen darstellen, addieren sich deren Toleranzen auf und ergeben somit in Bezug auf die ruhende, maschinenrahmenfeste äußere Formaufspannplatte eine Formschließeinheit mit geringer Genauigkeit und schwer einzuhaltender Plattenparallelität.

Auch aus der DE 197 33 667 ist eine Formschließeinheit dieser Art mit einer feststehenden und einer beweglichen Formaufspannplatte und einem in relativ zu der beweglichen Aufspannplatte verschieblichen Trägerblöcken gelagerten und um eine vertikale Achse drehbaren Formhälftenträger bekannt. Die bewegliche Formaufspannplatte und der Formhälftenträger können zu der feststehenden Formaufspannplatte hinbewegt und während eines Einspritzvorganges von thermoplastischem Kunststoff ein Schließdruck ausgeübt werden. Hierbei ergeben sich die bereits bei der Beschreibung der GB 2 300 142 genannten Nachteile einer relativen Instabilität der Vorrichtung mit großen Toleranzen.

Die DE 36 20 175 beschreibt eine Spritzgießmaschine mit mindestens zwei Plastifizier- und Einspritzeinheiten sowie einer feststehenden Formaufspannplatte und einer von feststehenden Holmen geführten verschiebbaren Formaufspannplatte, die jeweils die einen Formhälften von Spritzgießwerkzeugen tragen, und zwischen denen ein um seine Achse drehbarer und in Richtung der feststehenden Holme verschiebbarer prismatischer Kernträgerkörper angeordnet ist, dessen zu seiner Achse parallele Seitenflächen die anderen Formhälften der Spritzgießwerkzeuge aufweisen. Dieser Kernträgerkörper ist selbst nicht auf dem Maschinenbett abgestützt, sondern nur über an der beweglichen Formaufspannplatte verschiebbar gelagerte Holme gehalten. Dies bedeutet, dass nur Kernträgerkörper und ihnen zugeordnete Formhälften zum Einsatz kommen können, die kein großes Gewicht haben. Die Lagerung des Kernträgerkörpers relativ zur beweglichen Formaufspannplatte ohne jegliche Abstützung weder am Maschinenbett noch an den für die Schließbewegung verwendeten Holmen bedingt zudem eine besonders instabile Vorrichtung, mit allen schon bei der Diskussion der GB 2 300 142 geschilderten Nachteilen.

Aus der DE 197 10 412 ist eine Holmzugvorrichtung für eine 2-Platten- oder 3-Platten-Spritzgießmaschine bekannt, bei der die Holme zwei Formaufspannplatten, an denen jeweils eine Werkzeughälfte angeordnet ist, durchsetzen. Beim Öffnen des Werkzeugs werden die Holme aus der einen Aufspannplatte, mit der sie im geschlossenen Zustand verriegelt sind, herausgezogen und geben den Raum zwischen den Formaufspannplatten frei. Bei dieser Vorrichtung handelt es sich im Gegensatz zur vorliegenden Erfindung um eine Spritzgießmaschine ohne Wendevorrichtung für das Werkzeug, wodurch die Herstellung von Mehrkomponentenspritzgussteilen nicht ohne weiteres möglich ist.

Aus der DE 196 50 854 ist ein Verfahren und eine Vorrichtung zum Herstellen von Mehrschicht-Kunststoffteilen bekannt, wobei ein Kunststoff-Spritzgussteil mit mindestens einer Schicht aus 2-Komponenenten Duroplast beschichtet wird und die beiden Komponenten nacheinander zyklussynchron im selben Werkzeug gespritzt werden. Hierzu wird eine Grundplatte verwendet, die zwei gleiche, nebeneinander angeordnete Werkzeughälften trägt, und die drehbar um eine horizontale Maschinenlängsachse gelagert ist. Den Werkzeughälften gegenüber sind Matrizen von einer Spritzgießmaschine und einer RIM-Vorrichtung angebracht. Nach dem Einspritzen von Thermoplast mit der Spritzgießmaschine wird die Grundplatte um 180° gedreht und im folgenden Zyklus einerseits ein neues Thermosplastteil gespritzt und andererseits das Teil aus dem vorhergehenden Zyklus mit dem 2-Komponenenten Duroplast beschichtet. Der Nachteil bei dieser Vorrichtung besteht einerseits darin, dass beide Kunststoffeinspritzvorrichtungen auf einer Seite der Maschine vorgesehen sind, was erhebliche Probleme beim Stellplatz und beim Bedienen der Kunststoffvorrichtungen mit sich bringt. Zudem ist diese Vorrichtung nur für Kunststoffteile geringerer Größe geeignet, da die Nebeneinanderanordnung der beiden Werkzeughälften sonst nicht möglich ist. Aus der Beschreibung geht weiters nicht hervor, wie eine um die Werkzeuglängsachse drehbare Grundplatte fest mit den Matrizen von Spritzgießmaschine und RIM-Vorrichtung verbunden werden soll, so dass sich die Frage nach der Genauigkeit der Werkzeugpassung und der ausreichenden Aufbringung von Schließdruck aufdrängt.

Der Erfindung liegt daher die Aufgabe zugrunde, bei einer Formschließvorrichtung der angegebenen Art mit einfachen Mitteln eine wesentliche Erhöhung der Stabilität zu erzielen, so daß auch die Herstellung hochpräziser großer Mehrkomponenten-Kunststoffteile ermöglicht werden kann.

Die Lösung dieser Aufgabe erfolgt durch eine Formschließvorrichtung mit den Merkmalen des Patentanspruchs 1; die weiteren Patentansprüche betreffen weitere Ausgestaltungen der Erfindung.

Bei der erfindungsgemäßen Befestigung des Tragrahmens für das mittlere Formträgerelement am Maschinenrahmen kann zum einen das mittlere Formträgerelement in einer massiveren und dementsprechend stabileren Dreheinrichtung gelagert werden und zum anderen wird jede der beiden äußeren Formaufspannplatten auf kurzem Weg direkt, d.h. ohne Zwischenanordnung einer weiteren verschieblichen Formaufspannplatte zum ruhenden Tragrahmen des mittleren Formträgerelementes hin und her bewegt.

Vorzugsweise sind die Säulen der Formschließeinheit an einem Ende in einer zu einer der äußeren Formaufspannplatten parallelen Abstützplatte befestigt und durchsetzen am anderen Ende die andere äußere Formaufspannplatte und werden durch sägezahnförmig ineinandergreifende Elemente hinter der Formaufspannplatte verriegelt. Dabei ist es besonders vorteilhaft, wenn die Abstützplatte und die zugeordnete äußere Formaufspannplatte eine Sandwichplatte mit zwischenliegenden hydraulischen Druckkolben bilden. Diese Plattenanordnung zeichnet sich durch eine sehr kurze Bauweise aus und stellt ein besonders steifes System dar, da nur die zur Erzeugung des Schließdruckes erforderliche Hydraulikölmenge notwendig ist. Größere, zu hoher Kompressibilität neigende Hydraulikölmengen können dabei vermieden werden oder werden nur zu der von der Schließdruckerzeugung funktionell entkoppelten Durchführung der Bewegungsantriebe (Schließen, Losreißen und Öffnen) verwendet. Die nach der Erfindung ohnehin gegebene hohe Steifigkeit der Formschließvorrichtung wird durch die Verwendung des vorbeschriebenen Zweiplatten-Schließsystems mit zwischenliegender, maschinenrahmenfest gelagerter mittleren Formträgereinheit somit noch erheblich gesteigert. Eine derartige Formschließeinheit ist daher zur Herstellung von großen Mehrkomponenten-Kunststoffteilen, die eine hohe Maschinenpräzision erfordern, wie z.B. Automobilscheiben, Innenverkleidungen von Automobilen oder mehrschalige Behälter, besonders geeignet.

In einer anderen vorteilhaften Ausgestaltung der Erfindung sind die Säulen auf der einen Seite in der einen äußeren Formaufspannplatte befestigt und auf der anderen Seite als Kolben ausgebildet, die in hydraulischen, mit der anderen äußeren Formaufspannplatte fest verbundenen Zylindern reversierbar geführt wird. Auch dieses Zweiplatten-Schließsystem mit zwischenliegender maschinenrahmenfest gelagerter mittlerer Formträgereinheit zeichnet sich durch eine kurze Bauweise und hohe Steifigkeit aus.

Die äußeren Formaufspannplatten können für die Herstellung von mehrschichtigen Spritzgussteilen mit Einspritzaggregaten gekoppelt sein. In anderen Anwendungsfällen können anstelle der Einspritzaggregate RIM-Vorrichtungen wie PUR-Schäumanlagen oder ähnliche Vorrichtungen vorgesehen sein, um Mehrkomponenten-Kunststoffteile im RIM-Verfahren herzustellen. Besonders bevorzugt ist eine Mischbestückung, bei der ein Grundbauteil aus einem Thermoplast von einem Einspritzaggregat gespritzt wird und mit einer Schicht aus 2-Komponenenten Duroplast, insbesondere Polyurethan, im RIM-Verfahren beschichtet wird oder umgekehrt.

Ein besonderer Vorteil kann ferner darin bestehen, wenn der maschinenrahmenfeste Tragrahmen C-förmig gestaltet ist, d.h. zur Bedienseite eine Öffnung aufweist. Bei einem als Würfel ausgebildeten Formträgerelement mit vier Werkzeughälften kann dabei, bezogen auf eine der vier Werkzeughälften des Formträgerelementes, im ersten Takt das Grundbauteil gespritzt werden. Im zweiten Takt kann dieses Bauteil abkühlen. Im dritten Takt wird das Grundbauteil zum Zweikomponenten-Kunststoffteil vervollständigt. Im vierten Takt befindet sich die Werkzeughälfte mit dem fertigen Zweikomponenten-Kunststoffteil an der offenen Stelle des C-förmigen Tragrahmens und kann während der vierten Taktzeit entnommen werden. Da somit der Vorgang der Entnahme während des vierten Taktes abläuft, kann die Zykluszeit erheblich verkürzt werden. Ein weiterer Vorteil besteht darin, daß die Werkzeughälfte nach der Entnahme des fertigen Zweikomponenten-Kunststoffteils vor Ablauf der vierten Taktzeit noch mit Einlegeteilen, wie z.B. metallischen Schraubhülsen oder einem Kunststoffteil bestückt werden kann. Alternativ kann der C-förmige Rahmen auch so eingesetzt werden, dass sich das Grundbauteil im zweiten Takt an der offenen Seite des Rahmens befindet, und so ein zwischengelagerter Bearbeitungsschritt im zweiten Takt durchgeführt werden kann, der ansonsten noch im ersten Takt hätte erfolgen müssen. Ein solcher Bearbeitungsschritt, der normalerweise erst bei ausreichend abgekühltem Kunststoffteil erfolgen kann, ist beispielsweise die Oberflächenbehandlung des Grundbauteils, wodurch der im folgenden Schritt angespritzte Kunststoff eine bessere Verbindung mit diesem eingehen kann. Ein solcher Bearbeitungsschritt ist bei der Verbindung eines Thermoplast-Grundbauteils mit einer 2-Komponenenten Duroplasthaut, insbesondere einer Polyurethanhaut oder ähnlichem von Vorteil und wird z.B. von einem seitlich der Formschließvorrichtung stehenden Bedienroboter durchgeführt. Der Vorteil der Verkürzung der Zykluszeit ergibt sich bei einem Formträgerelement mit vier oder sechs Werkzeughälften. Der offene C-förmige Tragrahmen kann jedoch auch bei einem nur mit zwei Werkzeughälften bestückten Formträgerelement vorteilhaft sein, da die Werkzeugaufspannflächen für den Werkzeugwechsel oder für Wartungsarbeiten zum offenen Bereich des Tragrahmens geschwenkt werden kann. Da sich die erfindungsgemäßen Formschließeinheiten durch eine besonders kurze Bauweise auszeichnen, kann eine damit verbundene erschwerte Zugänglichkeit zu den mittleren Werkzeughälften ausgeglichen werden.

Eine Ausführungsform der Erfindung wird anhand der beigefügten Zeichnungen erläutert.

Es zeigen
- Fig. 1: die Seitenansicht auf eine Spritzgießmaschine mit erfindungsgemäßer Formschließeinheit,
- Fig. 2: im vergrößerten Maßstab die Schnittansicht gemäß der Schnittlinie II - II in Fig. 1,
- Fig. 3: die Seitenansicht auf eine andere Ausführungsform einer erfindungsgemäßen Formschließeinheit,
- Fig. 4: die Seitenansicht auf eine Spritzgießmaschine mit erfindungsgemäßer Formschließeinheit gemäß der ersten Ausführungsform mit RIM-Vorrichtung,
- Fig.5: die schematische Draufsicht auf die erfindungsgemäße Formschließeinheit mit einer Einspritzdüse und einem Mischkopf,
- Fig. 6: die schematische Draufsicht auf die erfindungsgemäße Formschließeinheit mit zwei Mischköpfen,
- Fig.7: die Seitenansicht einer Spritzgießmaschine mit maschinenrahmenfestem C-förmig offenen Tragrahmen,
- Fig. 8: die Schnittansicht gemäß der Schnittlinie V-V in Fig. 7 und
- Fig. 9: die perspektivische Ansicht der Spritzgießmaschine nach Fig. 7.

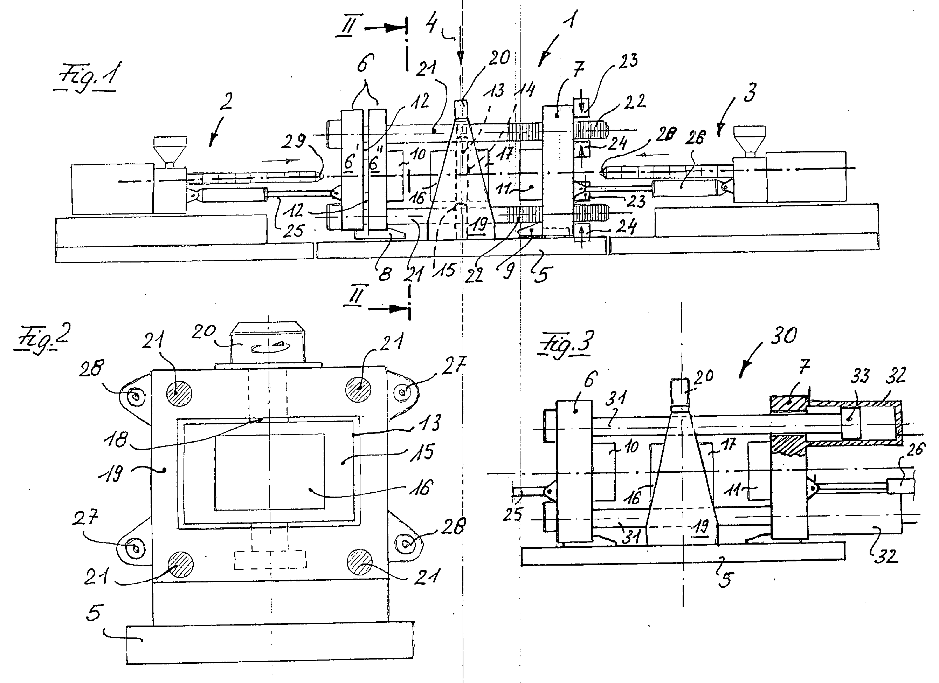

Die Spritzgießmaschine gemäß Fig. 1 umfasst eine Formschließeinheit 1 und zwei Einspritzaggregate 2 und 3. Mit dem Pfeil 4 ist lediglich die Spritzachse eines dritten möglichen Einspritzaggregates dargestellt, das in sogenannter T-Anordnung an der Spritzgießmaschine vorgesehen werden kann.

Die Formschließeinheit 1 besteht aus einem Maschinenrahmen 5, auf dem zwei äußere Formaufspannplatten 6 und 7 über Gleitschuhe 8 und 9 verschieblich abgestützt sind. Die Formaufspannplatten 6 und 7 tragen jeweils eine Werkzeughälfte 10 und 11. Die in Fig. 1 links dargestellte Formaufspannplatte 6 besteht aus einer sogenannten Sandwichpiatte, die sich aus zwei in sehr geringem Parallelabstand angeordneten Platten zusammensetzt, von denen die eine Platte eine Abstützplatte 6' und die andere Platte die Formträgerplatte 6" ist. Zwischen der Abstützplatte 6' und der Formträgerplatte 6" befinden sich vier hydraulische Druckkolben 12, von denen in der Zeichnung nur die zwei vorderen Druckkolben zu sehen sind.

Zwischen den beiden äußeren Formaufspannplatten befindet sich ein mittleres Formträgerelement 13, das zwei gegenüberliegende Formaufspannflächen 14 und 15 aufweist, auf denen jeweils eine linke und eine rechte mittige Werkzeughälfte 16 und 17 befestigt ist. Das in der Fig. 1 dargestellte Formträgerelement 13 ist plattenförmig und weist somit zwei Aufspannflächen 14 und 15 auf. Grundsätzlich kann das Formträgerelement auch als Würfel mit vier Formaufspannflächen ausgebildet sein.

Das Formträgerelement 13 ist mit einer senkrecht stehenden Drehachse 18 in einem fest mit dem Maschinenrahmen 5 verbundenen Tragrahmen 19 gelagert. Am Tragrahmen 19 befindet sich ein Drehantrieb 20, mit dem das Formträgerelement 13 mit den beiden mittigen Werkzeughälften 16 und 17 jeder der beiden äußeren Werkzeughälften 10 und 11 zugeordnet werden kann.

Die beiden äußeren Formaufspannplatten 6 und 7 sind durch vier Säulen 21 miteinander verbunden. In der linken äußeren Formaufspannplatte 6 sind die Säulen 21 in der Abstützplatte befestigt. Die Säulen 21 durchsetzen die rechte äußere Formaufspannplatte 7 und sind hinter dieser verriegelt. Das Verriegelungssystem besteht aus im Endbereich der Säulen 21 ausgebildeten sägezahnförmigen Rillen 22 in die komplementär sägezahnförmige Rillen von zwei gegeneinander bewegbaren Halbschalen 23 und 24 sperrklinkenartig einfahrbar sind.

Die Säulen 21 durchsetzen den Tragrahmen 19 in Gleitführungen.

Die Einspritzaggregate 2 und 3 sind mit den äußeren Formaufspannplatten 6 und 7 über hydraulische Stellelemente 25 und 26 gekoppelt, mit denen die Einspritzdüsen 29 an den Formaufspannplatten 6 und 7 in Spritzstellung positionierbar sind.

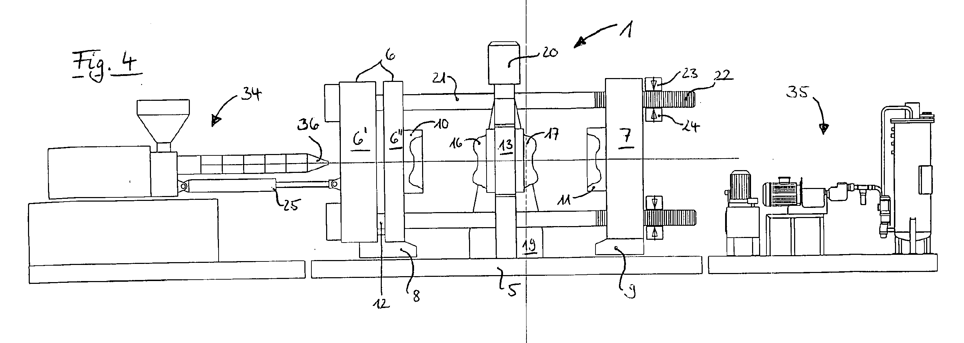

Die Schnittdarstellung gemäß Fig. 2 zeigt den auf dem Maschinenrahmen 5 befestigten Tragrahmen 19, der von den Säulen 21 durchsetzt ist. Innerhalb des Tragrahmens 19 ist das Formträgerelement 13 drehbar gelagert auf dessen Formaufspannfläche 14 die linke mittige Werkzeughälfte 16 befestigt ist. Die Drehachse 18 des Formträgerelementes 13 ist mit dem Drehantrieb 20 gekoppelt. Am äußeren Rand des Tragrahmens 19 sind Halterungen für hydraulische Stellantriebe 27 und 28 angeordnet (in Fig. 1 nicht dargestellt), mit denen die äußeren Formaufspannplatten 6 und 7 zum maschinenrahmenfesten Tragrahmen zu- und weg bewegt werden können. Die hydraulischen Stellantriebe 27 und 28 dienen dabei zur Durchführung der Werkzeugschließbewegung , mit der die Werkzeughälfte 10 der linken äußeren Formaufspannplatte 6 in Schließstellung mit der linken mittigen Werkzeughälfte 16 des mittleren Formträgerelements 13 gebracht werden kann. In gleicher Weise und gleichzeitig werden die Werkzeughälften 11 und 17 in Schließstellung gebracht. Das Heranfahren der beiden äußeren Formaufspannplatten 6 und 7 an das maschinenrahmenfeste Formträgerelement 13 erfolgt bei geöffnetem Verriegelungssystem, das nach Vollendung der Schließbewegung sofort in Sperrstellung gebracht wird, in der sich die beiden Halbschalen 23 und 24 im Eingriff mit den sägezahnförmigen Rillen 22 der Säulen 21 befinden. Die Bewegung in Sperrstellung ist in Fig. 1 durch die Pfeile an den Halbschalen 23 und 24 angegeben.

Unmittelbar nach der Verriegelung erfolgen die Schließdruckerzeugung über die Druckkolben 12 und ein erster Spritzvorgang über die an die äußeren Formaufspannplatten 6 und 7 angedockten Einspritzaggregate 2 und 3.

Nach Vollendung des ersten Spritzvorgangs wird das Verriegelungssystem gelöst und die hydraulischen Stellantriebe 27 und 28 bewirken zunächst das Losreißen der geschlossenen Werkzeughälften 10, 12, 16, 17 und im weiteren ein Wegfahren der äußeren Formaufspannplatten 6 und 7 von dem maschinenrahmenfesten Formträgerelement 13 bzw. dem Tragrahmen 19.

Anschließend wird das Formträgerelement 13 um 180° gedreht, so daß den äußeren Werkzeughälften 10 und 11 die gewendeten mittigen Werkzeughälften 16 und 17 gegenüberliegen. Mit diesen neuen Werkzeughälften-Paarungen werden die im ersten Spritzgießvorgang hergestellten Teil-Spritzgießartikel in einem nachfolgenden zweiten Spritzgießvorgang zum fertigen Zweikomponenten-Kunststoffteil vervollständigt.

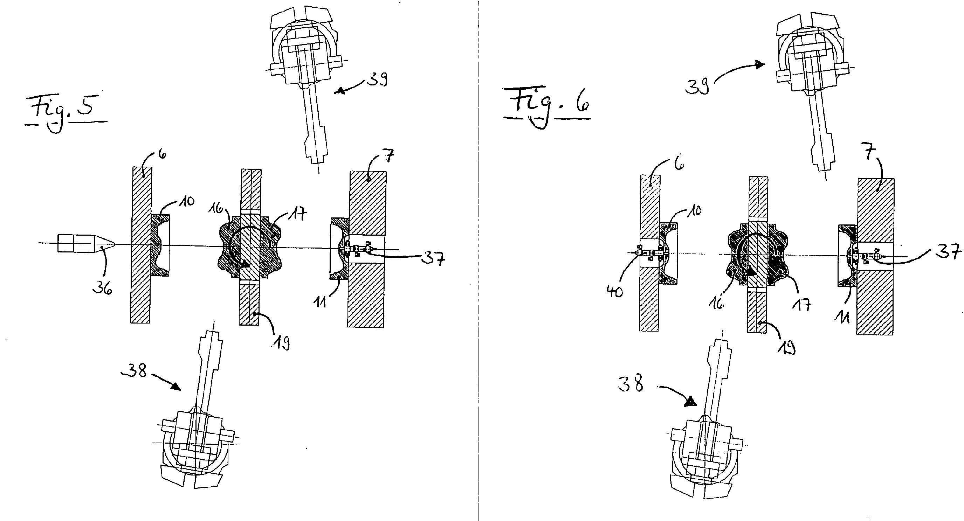

Die Fig. 3 zeigt eine im Vergleich zur Formschließeinheit 1 nach Fig. 1 andere Ausführungsform einer Formschließeinheit 30, bei der gleichwirkende Teile mit denselben Bezugszeichen versehen sind wie bei der Formschließeinheit nach Fig. 1.

Die Formschließeinheit 30 besteht aus einer einstückigen äußeren Formaufspannplatte 6 in der Säulen 31 befestigt sind. Die Säulen 31 durchsetzen sowohl den Tragrahmen 19 als auch die rechte äußere Formaufspannplatte 7, die vier Hydraulikzylinder 32 aufweist, in denen die als Kolben 33 ausgebildeten Enden der Säulen 31 reversierbar geführt sind. Mit diesen Kolben-Zylindereinheiten 32, 33 sind einerseits die Fahrbewegungen der Formschließeinheit 30 durchführbar, wie das Öffnen und das Schließen der Werkzeugformhälften 10, 11, 16, 17. Andererseits kann damit auch der Schließdruck erzeugt werden. Die hierfür erforderliche Druckübersetzereinrichtung ist im Kolben 33 integriert und nicht gesondert dargestellt. Im Gegensatz zur Ausführungsform nach Fig. 1 wird der Schließdruck nicht über ein Verriegelungssystem abgestützt, sondern wird hydraulisch von der Kolben-Zylindereinheit 32, 33 gehalten. Im weiteren Gegensatz zur Ausführungsform nach Fig. 1 erfolgt auch keine Funktionsaufteilung. Während bei der Formschließeinheit 1 nach Fig. 1 der Schließdruck durch die Druckkolben 12 erzeugt wird und die Fahrbewegung (Öffnen, Schließen, Losreißen) von den hydraulischen Stellelementen 25, 26 bewerkstelligt wird, werden beide Hauptfunktionen (Fahrbewegungen und Schließdruckerzeugung) bei der Formschließeinheit 30 von der Kolben-Zylindereinheit 32, 33 durchgeführt.

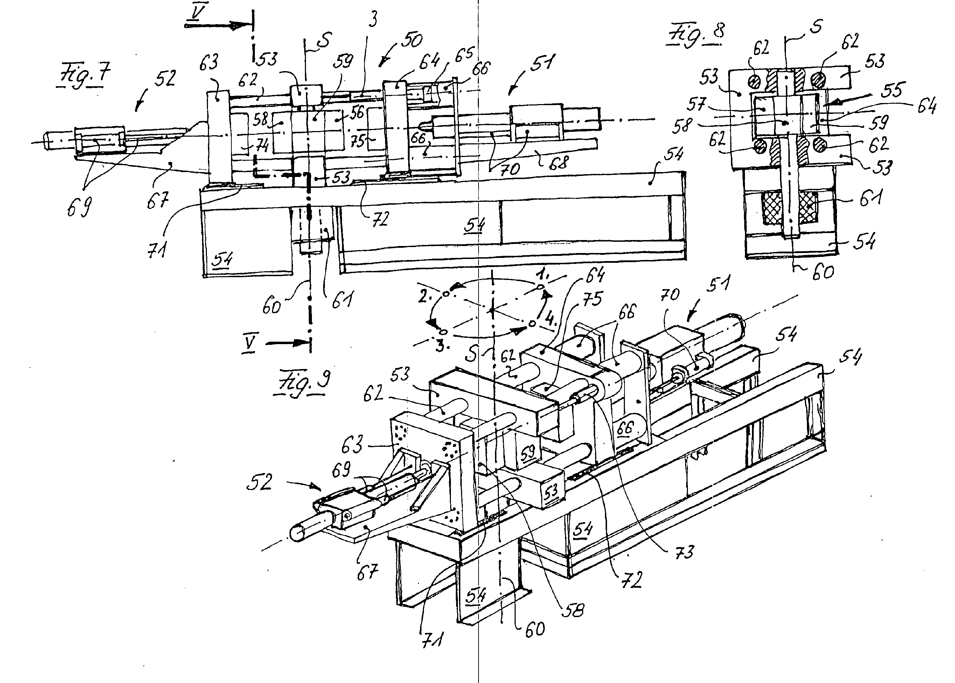

In den Figuren 4 bis 6 sind zwei weitere Einsatzmöglichkeiten für eine Formschließeinheit 1 aufgezeigt, wobei gleiche Elemente gleiche Bezugszeichen behalten. In Fig. 4 ist die Formschließeinheit 1 dargestellt, hier ist an die Abstützplatte 6' von links über ein hydraulisches Stellelement 25 ein Einspritzaggregat 34 gekoppelt. Eine zugeordnete Einspritzdüse ist an der Formaufspannplatte 6 in Spritzstellung positionierbar. Auf der rechten Seite der Formschließeinheit 1 ist eine RIM-Vorrichtung 35 (RIM: Reaction Injection Molding) vorgesehen, wie sie z.B. bei der Verarbeitung von Polyurethan (PUR) verwendet wird. Diese Vorrichtung wird hier nicht genauer beschrieben, kann aber als bekannt vorausgesetzt werden und umfasst im wesentlichen Förder- und Dosiermechanismen für die einzelnen zu verarbeitenden Chemikalien, wie Polyol, Polyisocyanat und mögliche Zusätze. Über einen in Fig. 4 nicht dargestellten Mischkopf ist die RIM-Vorrichtung an die Formschließeinheit 1 gekoppelt.

In Fig. 5 ist die Anordnung gemäß Fig. 4 schematisch in der Draufsicht dargestellt, wobei zwei mögliche Handling-Roboter 38, 39 jeweils seitlich neben den geöffneten Werkzeughälften 10, 16 und 11, 17 vorgesehen sind. Hierbei kann es sich um einen Bearbeitungsroboter 38 und einen Entnahmeroboter 39 handeln. Über einen Mischkopf 37 ist die in Fig. 5 nicht gezeigte RIM-Vorrichtung an die rechte Formaufspannplatte 7 gekoppelt, dieser Mischkopf 37 steht in Spritzverbindung mit der rechten äußeren Werkzeughälfte 11. Bei einer Anordnung gemäß Fig. 4 erfolgt die Herstellung des Grundbauteils wie zuvor geschildert. Bei geöffneten Werkzeugen findet sodann eine Oberflächenbehandlung des zuvor gespritzten Grundbauteils statt, die von dem Bearbeitungsroboter 38 vorgenommen wird. Hierauf wird das Formträgerelement 13 um 180° gedreht und die Werkzeughälften werden wieder verschlossen. Im nachfolgenden Schritt wird einerseits auf der linken Seite ein neues Grundbauteil gespritzt, während auf der rechten Seite über den Mischkopf 37 das PUR-Reaktionsgemisch in das Werkzeug eingespritzt wird und eine PUR-Haut auf der Oberfläche des Grundbauteils bildet. Bei der nachfolgenden Öffnung der Werkzeuge kann einerseits das fertige Bauteil von einem Entnahmeroboter 39 oder einer anderen Entnahmevorrichtung entnommen werden, während gleichzeitig die Oberflächenbehandlung des Grundbauteils stattfindet.

Fig. 6 zeigt schematisch eine ähnliche Anordnung wie Fig. 5, nur ist hier das linke Einspritzaggregat 34 mit Einspritzdüse 36 durch eine weitere nicht dargestellte RIM-Vorrichtung ersetzt worden, die über einen Mischkopf 40 an die linke Formaufspannplatte 6 gekoppelt ist. Mit dieser Anordnung können Mehrkomponenten-Kunststoffteile gefertigt werden, bei denen sowohl das Grundbauteil als auch die Beschichtung aus PUR bestehen, der Herstell-Vorgang verläuft analog.

Auch mit einer Formschließeinheit 30 gemäß Fig. 3 können zumindest teilweise aus PUR bestehende Mehrkomponenten-Kunststoffteile vorteilhaft hergestellt werden.

Die Abstützung des Schließdruckes über das Verriegelungssystem gemäß der Ausführungsform nach Fig. 1 stellt ein besonders stabiles und damit höher belastbares System dar, so daß die Formschließeinheit 1 nach Fig. 1 insbesondere für die Herstellung von großen Mehrkomponenten-Kunststoffteilen, die eine hohe Präzision erfordern, geeignet ist.

Die Ausführungsform der Formschließvorrichtung 30 nach Fig. 3 ist hingegen für die wirtschaftliche Herstellung mittlerer bis kleinerer Mehrkomponenten-Kunststoffteile besonders geeignet.
Die Spritzgießmaschine gemäß den Figuren 7 bis 9 umfasst eine Formschließeinheit 50 und zwei Einspritzaggregate 51 und 52. Die Formschließeinheit 50 entspricht im wesentlichen der Formschließeinheit 30 nach Fig. 3, weist jedoch anstelle des geschlossenen Tragrahmens 19 einen C-förmigen Tragrahmen 53 auf, der zur Bedienseite der Spritzgießmaschine offen ist. Der C-förmige Tragrahmen 53 ist mit dem Maschinenrahmen 54 fest verbunden und trägt, drehbar gelagert, ein Formträgerelement 55, auf dem vier mittige Werkzeughälften 56, 57, 58 und 59 aufgespannt sind. Die Drehachse 60 des Formträgerelementes 55 ist in beiden Schenkeln des C-förmigen Tragrahmens 53 gelagert und ist über einen im Maschinenrahmen 54 angeordneten Drehantrieb 61 taktweise antreibbar. Der C-förmige Tragrahmen 53 wird in Gleitführungen von vier Säulen 62 durchsetzt, die an einem Ende in einer linken äußeren Formaufspannplatte 63 befestigt sind und am anderen Ende eine rechte äußere Formaufspannplatte 64 in Gleitführungen durchsetzen und mit Kolben 65 in vier Hydraulikzylindern 65 reversierbar geführt sind. Die beiden äußeren Formaufspannplatten 63 und 64 weisen Halterungen 67 und 68 für die Einspritzaggregate 51 und 52 auf, die mit hydraulischen Stellelementen 69 und 70 an die Einspritz-Durchgangsöffnungen der Formaufspannplatten 63 und 64 heranfahrbar sind.

Die äußeren Formaufspannplatten 63 und 64 sind auf Gleitschienen 71 und 72 auf dem Maschinenrahmen 54 verschieblich abgestützt. Die Verschiebung der äußeren Formaufspannplatten 63 und 64 erfolgt daher über zwei an den Ecken der Formaufspannplatte 64 diagonal gegenüberliege hydraulische Stellantriebe 73, von denen in den Figuren 7 und 9 nur der obere Stellantrieb sichtbar ist. Die Bewegung der linken äußeren Formaufspannplatte 63 erfolgt über die hydraulische Kolben-Zylindereinheiten 65, 66.

Die vier mittigen Werkzeughälften 56, 57, 58 und 59 sind taktweise mit den auf den beiden äußeren Formaufspannplatten 63 und 64 angeordneten Werkzeughälften 74 und 75 zusammenschließbar.

Der Spritzvorgang wird nachfolgend anhand des taktmäßigen Durchlaufes der mittigen Werkzeughälfte 56 erläutert. Die vier jeweils um 90° versetzten Taktstellungen 1 bis 4 des würfelförmigen Formträgerelements 55 sind in Fig. 9 bezüglich der Schwenkachse S angegeben. Im ersten Takt werden die beiden Werkzeughälften 56 und 75 zusammengeschlossen und es wird ein Grundkörper gespritzt. Im zweiten Takt steht die Werkzeughälfte 55 dem senkrechten Schenkel des C-förmigen Tragrahmens 53 gegenüber. Der zuvor gespritzte Grundkörper kann dabei abkühlen. Im dritten Takt wird die Werkzeughälfte 56 mit der Werkzeughälfte 74 der linken äußeren Formaufspannplatte 63 zusammengeschlossen und der Grundkörper wird zu einem Zweikomponenten-Spritzgießteil vervollständigt. Im vierten Takt wird die Werkzeughälfte 56 in die Öffnung des C-förmigen Tragrahmens 53 geschwenkt. In dieser Stellung kann das fertige Zweikomponenten-Spritzgießteil leicht entnommen werden und die entleerte Werkzeughälfte 56 kann gegebenenfalls anschließend mit Einlegeteilen bestückt werden. Bei diesem Betriebsablauf erfolgt der Vorgang des Entnehmens während der Taktzeit, die von den Vorgängen Schließen, Schließdruckaufbau, Spritzen, Nachdruckphase bestimmt wird. Da hierbei keine Zeitspanne für die Entnahme des Spritzgießteils zu berücksichtigen ist., weil die Entnahme zeitgleich an der offen abgeschwenkten Werkzeughälfte erfolgen kann, kann die Mehrkomponenten-Spritzgießmaschine mit verkürzter Zykluszeit betrieben werden.

Auch bei der Verwendung von einer oder mehreren RIM-Vorrichtungen kann eine Formschließeinheit 50 gemäß Fig. 7 mit C-förmigem Tragrahmen 53 vorteilhaft zum Einsatz kommen. In diesem Fall würde die Werkzeughälfte mit dem Grundbauteil im zweiten Takt in die Öffnung des C-förmigen Rahmens 53 geschwenkt, wo das Bauteil zuerst abkühlt und dann eine Oberflächenbehandlung erfährt. Im dritten Takt wird die Werkzeughälfte mit dem Grundbauteil mit der mit der Mischdüse verbundenen Werkzeughälfte zusammengefahren und das Bauteil durch Aufbringen einer PUR-Haut vervollständigt, während auf der anderen Seite des Tragrahmens ein neues Grundbauteil gespritzt wird. Beim nächsten Auffahren wird das fertige Bauteil entnommen und ein neuer Zyklus beginnt. Es kann auch vorgesehen sein, dass das Bauteil im vierten Takt entnommen wird, dies setzt voraus, dass der Platz zwischen dem senkrechten Schenkel des C-förmigen Tragrahmens 53 und dem fertigen Bauteil für den Einsatz einer Entnahmevorrichtung ausreicht. Alternativ kann im zweiten Takt der Bearbeitungsvorgang auf der geschlossenen Seite des C-förmigen Tragrahmens 53 erfolgen, wobei ausreichend Raum für das Bearbeitungsgerät vorhanden sein muss, während im vierten Takt das fertige Bauteil auf der offenen Seite entnommen wird.

Die Verfahrbewegungen für die Formaufspannplatten 6, 7 und 62, 63 der vorbeschriebenen Formschließvorrichtungen 1, 30, 50 kann hydraulisch oder elektromechanisch über Kugelspindelantriebe erfolgen. Grundsätzlich kann das Prinzip des maschinenrahmenfesten C-förmigen Tragrahmens 53 mit einer zur Bedienerseite gerichteten Öffnung auch bei der Formschließvorrichtung 1 angewendet werden, bei der die beiden Formaufspannplatten 6 und 7 bei geöffnetem Verriegelungssystem (sägezahnförmige Rillen 22, Halbschalen 23, 24) hydraulisch oder elektromechanisch verfahren (Öffnen, Schließen, Losreißen) werden können und bei der die Schließdruckerzeugung über hydraulische Druckkolben 12 in der als Sandwichplatte ausgebildeten linken Formaufspannplatte 6 erfolgt.

### Bezugszeichenliste

- 1.: Formschließeinheit (1. Ausführungsform)
- 2.: Einspritzaggregat
- 3.: Einspritzaggregat
- 4.: mögliches Einspritzaggregat (Pfeil 4)
- 5.: Maschinenrahmen
- 6.: äußere Formaufspannplatte (links)
- 6': Abstützplatte
- 6": Formträgerplatte
- 7.: äußere Formaufspannplatte (rechts)
- 8.: Gleitschuh
- 9.: Gleitschuh
- 10.: Werkzeughälfte (links außen)
- 11.: Werkzeughälfte (rechts außen)
- 12.: Druckkolben
- 13.: Formträgerelement
- 14.: Formaufspannfläche
- 15.: Formaufspannfläche
- 16.: mittige Werkzeughälfte (links)
- 17.: mittige Werkzeughälfte (rechts)
- 18.: Drehachse
- 19.: Tragrahmen
- 20.: Drehantrieb
- 21.: Säule
- 22.: sägezahnförmige Rillen
- 23.: Halbschale
- 24.: Halbschale
- 25.: hydraulisches Stellelement
- 26.: hydraulisches Stellelement
- 27.: hydraulische Stellantriebe
- 28.: hydraulische Stellantriebe
- 29.: Einspritzdüse
- 30.: Formschließeinheit (2. Ausführungsform)
- 31.: Säule
- 32.: Hydraulikzylinder
- 33.: Kolben
- 34.: Einspritzaggregat
- 35.: RIM-Vorrichtung
- 36.: Einspritzdüse
- 37.: Mischkopf
- 38.: Bearbeitungsroboter
- 39.: Entnahmeroboter
- 40.: Mischkopf

- 50.: Formschließeinheit (3. Ausführungsform)
- 51.: Einspritzaggregat
- 52.: Einspritzaggregat
- 53.: C-förmiger Tragrahmen
- 54.: Maschinenrahmen
- 55.: Formträgerelement
- 56.: mittige Werkzeughälfte
- 57.: mittige Werkzeughälfte
- 58.: mittige Werkzeughälfte
- 59.: mittige Werkzeughälfte
- 60.: Drehachse
- 61.: Drehantrieb
- 62.: Säule
- 63.: Formaufspannplatte links
- 64.: Formaufspannplatte rechts
- 65.: Kolben
- 66.: Hydraulikzylinder
- 67.: Halterung
- 68.: Halterung
- 69.: hydraulisches Stellelement
- 70.: hydraulisches Stellelement
- 71.: Gleitschiene
- 72.: Gleitschiene
- 73.: hydraulischer Stellantrieb
- 74.: Werkzeughälfte links
- 75.: Werkzeughälfte rechts

## Patentansprüche

1. Formschließvorrichtung zur Herstellung von aus zwei oder mehreren Kunststoffkomponenten bestehenden Kunststoffteilen, bei der zwischen zwei äußeren Formaufspannplatten ein mittleres drehbares Formträgerelement angeordnet ist, und wobei mindestens ein Einspritzaggregat einer Spritzgießmaschine vorgesehen ist,
**dadurch gekennzeichnet,**
**dass** die eine der äußeren Formaufspannplatten (6. 7) mit mindestens einem Einspritzaggregat (34) mit Einspritzdüse (36) und die andere der äußeren Formaufspannplatten (6, 7) mit mindestens einer RIM-Vorrichtung (35) mit Mischkopf (37) gekoppelt ist.

2. Formschließvorrichtung nach Anspruch 1,
**dadurch gekennzeichnet,**
**dass** eine oder mehrere PUR-Schäumanlagen als RIM-Vorrichtungen vorgesehen ist bzw. sind.

3. Formschießvorrichtung nach einem der Ansprüche 1 oder 2,
**dadurch gekennzeichnet,**
**dass** das mittlere Formträgerelement in jeweils paarweise gegenüberliegender Anordnung zwei oder vier Formaufspannflächen zur Befestigung von zwei oder vier Werkzeughälften aufweist, dass eine Wendevorrichtung vorgesehen ist, mit der jede Werkzeughälfte des Formträgerelements zu den Werkzeughälften der äußeren Formaufspannplatten in Schließstellung gebracht werden kann, und dass die äußeren Formaufspannplatten und das mittlere Formträgerelement zusammenschließbar sind.

4. Formschließvorrichtung nach einem der Ansprüche 1 bis 3,
**dadurch gekennzeichnet,**
**dass** an dem mittleren Formträgerelement ein oder mehrere Einspritzaggregate und/oder ein oder mehrere RIM-Vorrichtungen angeordnet sind, die in Spritzverbindung mit einem oder mehreren der auf dem Formtragereiement befestigten werkzeughälften bringbar sind.

5. Formschließvorrichtung nach einem der Ansprüche 1 bis 4,
**dadurch gekennzeichnet,**
**dass** das mittlere Formträgerelement in einem fest mit dem Maschinenrahmen verbundenen Tragrahmen drehbar gelagert ist und die äußeren Formaufspannplatten verschieblich am Maschinenrahmen abgestützt sind und auf das mittlere Formträgerelement zu- und von diesem wegbewegbar sind.

6. Formschließvorrichtung nach einem der Ansprüche 1 bis 5,
**dadurch gekennzeichnet,**
**dass** das Formträgerelement plattenförmig mit zwei Formaufspannflächen für zwei mittige Werkzeughälften ausgebildet ist.

7. Formschließvorrichtung nach einem der Ansprüche 1 bis 5,
**dadurch gekennzeichnet,**
**dass** das Formträgerelement würfelförmig mit vier Formaufspannflächen für vier mittige Werkzeughälften ausgestaltet ist.

8. Verfahren zur Herstellung von aus zwei oder mehreren Kunststoffkomponenten bestehenden Kunststoffteilen, wobei ein Grundbauteil aus einem Thermoplast von einem Einspritzaggregat gespritzt wird und mit einer Schicht aus 2-Komponenten-Duroplast, insbesondere Polyurethan, im RIM-Verfahren beschichtet wird,
**dadurch gekennzeichnet,**
**dass** zwischen einer ersten äußeren Formaufspannplatte und einem mittleren Formträgerelement das Grundbauteil aus dem Thermoplast von einem mit dieser äußeren Formaufspannplatte gekoppelten Einspritzaggregat gespritzt wird, dass das Grundbauteil mit dem mittleren Formträgerelement auf die Seite der zweiten äußeren Formaufspannplatte gedreht wird, und dass mit einer mit der zweiten Formaufspannplatte gekoppelten RIM-Vorrichtung mit Mischkopf das Grundbauteil mit der Schicht aus dem 2-Komponenten-Duroplast beschichtet wird.

9. Verfahren nach Anspruch 8,
**dadurch gekennzeichnet,**
**dass** zwischen der ersten äußeren Formaufspannplatte und dem mittleren Formträgerelement ein neues Grundbauteil gespritzt wird, während zwischen dem mittleren Formträgerelement und der zweiten äußeren Formaufspannlatte über den Mischkopf ein PUR-Reaktionsgemisch eingespritzt wird und eine PUR-Haut auf der Oberfläche des Grundbauteils bildet
